# EUROPEAN PATENT APPLICATION

(11) **EP 3 644 095 A1**
(43) Date of publication of application: **29.04.2020**
(21) Application number: 18202071.9
(22) Date of filing: 23.10.2018
(51) Int. Cl.: G01S 17/93, G01S 13/93, G01S 13/04, G01S 17/02, G02B 27/00, G01S 17/87, G01S 13/87, B60W 50/14, B60W 30/09, G06K 9/00, G01S 13/86

(54) **OBJECT DETECTION SYSTEM**

(71) Applicant: Veoneer Sweden AB, 447 83 Vårgårda (SE)
(72) Inventor: Lovtjärn, André, 74941 Enköping (SE)
(74) Representative: Sandstedt, Jonas Sven James

(57) **Abstract**

The present disclosure relates to a vehicle environment detection system (1) that comprises a main control unit (2) and a first environment detection sensor (3). The main control unit (2) is adapted to determine if there is an object (7) that is detectable by the first environment detection sensor (3), and if that is the case, to first determine if the object (7) is detectable by an environment observing unit (5a, 5b), and then to communicate information regarding the object (7). This communication is performed in dependence of if the object (7) has been determined to be detectable by the environment observing unit (5a, 5b) or not.

## Description

The present disclosure relates to a vehicle environment detection system that comprises a main control unit and a first environment detection sensor.

Many vehicle environment detection systems comprise one or more sensors such as for example radar sensors, LIDAR sensors, camera devices and ultrasonic sensors. However, an object that is occluded for a sensor or a driver can cause confusion and possible danger.

It is therefore desirable to have a vehicle environment detection system that is adapted to handle objects that are occluded for a sensor and/or a driver.

The object of the present disclosure is to provide a vehicle environment detection system that is adapted to handle objects that are occluded for a sensor and/or a driver.

This object is obtained by means of a vehicle environment detection system that comprises a main control unit and a first environment detection sensor. The main control unit is adapted to determine if there is an object that is detectable by the first environment detection sensor, and if that is the case, to first determine if the object is detectable by an environment observing unit, and then to communicate information regarding the object. This communication is performed in dependence of if the object has been determined to be detectable by the environment observing unit or not.

In this way, different actions are enabled in dependence of whether both the first environment detection sensor and the environment observing unit can detect the object, or if only the first environment detection sensor can detect the object.

According to some aspects, when the object has been determined to be detectable by the first environment detection sensor, the main control unit is adapted to communicate a first type of information regarding the object if the object has been determined to be detectable by the environment observing unit. Alternatively, the main control unit is adapted to communicate a second type of information regarding the object if the environment observing unit has been determined to be unable to detect the object.

In this way, different actions are enabled in dependence of whether both the first environment detection sensor and the environment observing unit can detect the object, or if only the first environment detection sensor can detect the object.

According to some aspects, the second type of information regarding the object is adapted to take into account that the environment observing unit is unable to detect the object.

In this way, warnings and/or actions can be adapted to whether the environment observing unit is unable to detect the object or not.

According to some aspects, the main control unit is adapted to communicate said information to the environment observing unit.

In this way, the environment observing unit will become aware of undetectable objects.

According to some aspects, the vehicle environment detection system further comprises a safety control unit and safety means. The safety control unit is arranged to control the safety means in dependence of input from the main control unit.

According to some aspects, the safety means comprises a warning issuing device that is adapted to issue a first type of warning that corresponds to the first type of information and a second type of warning that corresponds to the second type of information.

In this way, confusion regarding warnings about non-observable objects is avoided.

According to some aspects, the safety means comprises at least one of automatic steering and automatic braking.

According to some aspects, the main control unit is adapted to communicate said information to the safety control unit.

According to some aspects, the environment observing unit is constituted by a second environment detection sensor that is comprised in the vehicle environment detection system.

According to some aspects, the environment observing unit is constituted by a driver.

According to some aspects, the driver is adapted to detect objects along a second plurality of sightlines. The vehicle environment detection system further comprises an eye-tracking means that is adapted to at least partly determine the second plurality of sightlines, and to communicate the determined sightlines to the main control unit. The main control unit is adapted to determine if the object is detectable by the second driver based on the communicated determined sightlines.

In this way, the possible sightlines can be determined such that it further can be determined whether the driver can see the object or not.

According to some aspects, each environment detection sensor is constituted by at least one of a LIDAR device, a radar device or a camera device.

Generally, the present disclosure also relates to method for a vehicle environment detection system, where the method comprises detecting objects using a first environment detection sensor and detecting objects using an environment observing unit. The method further comprises determining if there is an object that is detectable by the first environment detection sensor. If that is the case, the method comprises first determining if the object is detectable by the environment observing unit, and then communicating information regarding the object in dependence of if the object has been determined to be detectable by the environment observing unit or not.

The method is associated with the advantages mentioned for the vehicle environment detection system above.

### BRIEF DESCRIPTION OF THE DRAWINGS

The present disclosure will now be described more in detail with reference to the appended drawings, where:
- Figure 1: shows a schematic top view of a vehicle in a traffic situation;
- Figure 2: shows a schematic side view of a vehicle with a driver;
- Figure 3: shows a schematic view of a display where a hidden object is shown; and

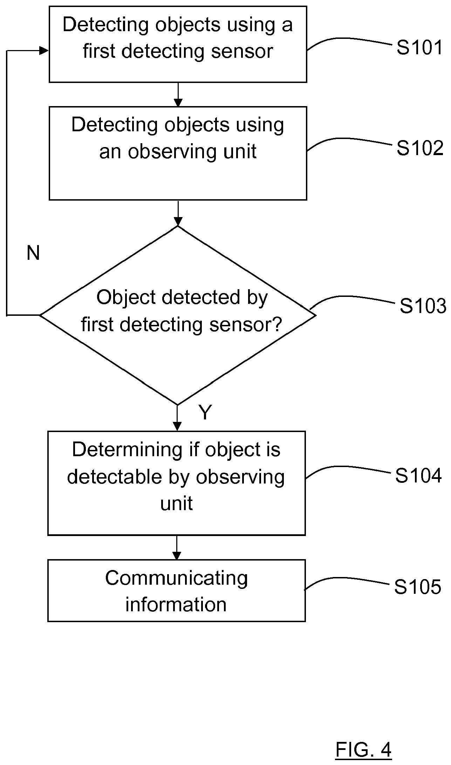

- Figure 4: shows a flowchart for a method according to the present disclosure.

### DETAILED DESCRIPTION

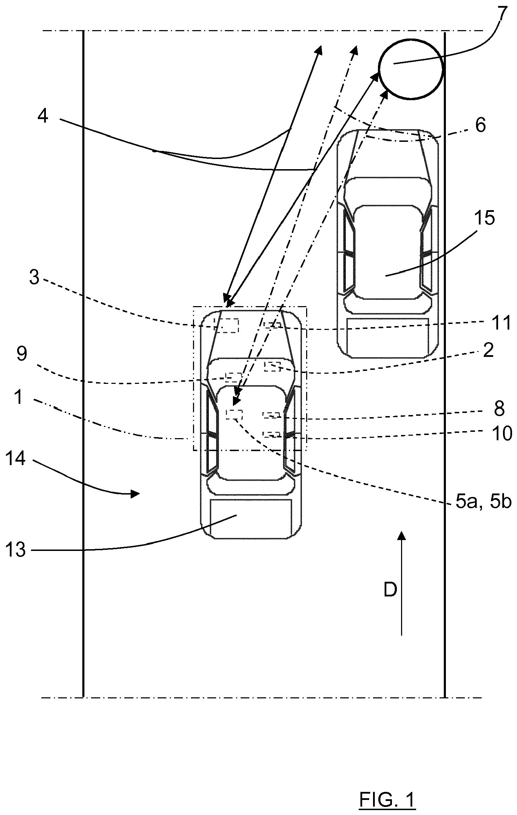

Figure 1 schematically shows a top view of a vehicle 13 arranged to run on a road 14 in a forward direction D, where the vehicle 1 comprises a vehicle environment detection system 1. The vehicle environment detection system 1 comprises a main control unit 2, and a first environment detection sensor 3 that is adapted to detect objects along a first plurality of sightlines 4 (only a few sightlines shown for reasons of clarity).

In a first example, the vehicle environment detection system 1 further comprises an environment observing unit 5a that is constituted by a second environment detection sensor 5a and is adapted to detect objects along a second plurality of sightlines 6 (only a few sightlines shown for reasons of clarity).

The first environment detection sensor 3 and the second environment detection sensor 5a are each constituted by any suitable detector device such as for example a LIDAR (Light detection and ranging) device, a radar device or a camera device, or a combination of two or more detector devices.

As shown in Figure 1, there is an object 7 that is detectable by the first environment detection sensor 3 but not by the second environment detection sensor 5a due to an object, here a further vehicle 15.

According to the present disclosure, the main control unit 2 is generally adapted to determine if there is an object 7 that is detectable by the first environment detection sensor 3, and if that is the case, to first determine if the object 7 is detectable by second environment detection sensor 5a, and then to communicate information regarding the object 7, where this communication is performed in dependence of if the object 7 is detectable by the second environment detection sensor 5a or not.

According to some aspects, the main control unit 2 is adapted to communicate a first type of information regarding the object 7 if the object is detectable by the second environment detection sensor 5a, and to communicate a second type of information regarding the object 7 if the second environment detection sensor 5a is unable to detect the object 7. According to some aspects, the second type of information regarding the object 7 is adapted to take into account that the second environment detection sensor 5a is unable to detect the object 7. According to some aspects, the first type of information includes absence of communication, and according to some further aspects this means that the main control unit 2 does not communicate any information at all regarding the object 7.

In this case, the main control unit 2 can determine that there is an object 7 that is detectable by the first environment detection sensor 3 but not by the second environment detection sensor 5a. The main control unit 2 then communicates information regarding the object, where this communication is performed in view of the object 7 not being detectable by the second environment detection sensor 5a, the information being of the second type.

According to some aspects, the main control unit 2 is adapted to communicate said information, in this case the second type of information, to the second environment detection sensor 5a. According to some further aspects, the second type of information can be tailored to provide the second environment detection sensor 5a with data regarding the object 7 and to prepare the second environment detection sensor 5a for the object 7 that soon may come into its view.

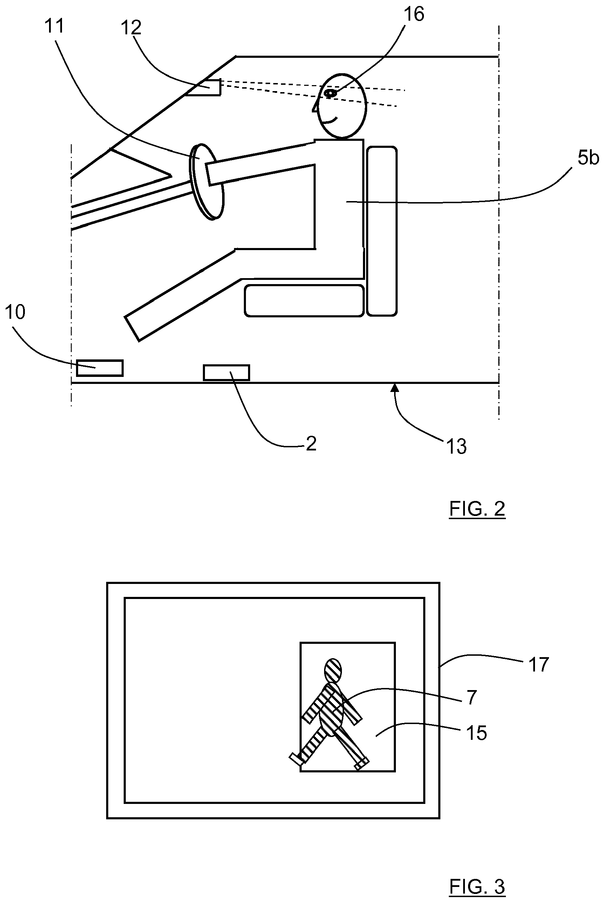

In the following second example, with reference also to Figure 2, the environment observing unit is constituted by a driver 5b.

The driver 5b is adapted to detect objects along the second plurality of sightlines 6 and the vehicle environment detection system 1 further comprises an eye-tracking means 12 that is adapted to at least partly determine the second plurality of sightlines 6, and to communicate the determined sightlines 6 to the main control unit 1. The main control unit 1 is adapted to determine if the object 7 is detectable by the second driver 5b based on the communicated determined sightlines 6.

The eye-tracking means 12 is adapted to determine where a person is looking by analyzing the configuration of the eyes 16 and can be of any suitable kind, being well-known to the skilled person.

This means that the eye-tracking means 12 enables the main control unit 1 to determine whether the object 7 is detectable by the driver 5b or not. As in the previous example, according to some aspects, the main control unit 2 is adapted to communicate a first type of information regarding the object 7 if the object is detectable by the driver 5b, and to communicate a second type of information regarding the object 7 if the driver 5b is unable to detect the object 7. According to some aspects, the second type of information regarding the object 7 is adapted to take into account that the driver 5b is unable to detect the object 7.

In this case, the main control unit 2 can determine that there is an object 7 that is detectable by the first environment detection sensor 3 but not by the driver 5b. The main control unit 2 then communicates information regarding the object 7, where this communication is performed in view of the object 7 not being detectable by the driver 5b, the information being of the second type.

According to some aspects, the main control unit 2 is adapted to communicate said information, in this example the second type of information, to the driver. According to some further aspects, the second type of information can be tailored with knowledge of the driver 5b not being aware of the object 7. In this case, the information can for example be informative and enlighten the driver 5b about the fact that there is an object that is obscured for the driver 5b, and possibly in which direction.

Otherwise, a warning about non-observable objects may cause confusion, since the driver 5b will not immediately be able to find the source of the warning. The second type of information is according to some aspects directed towards that there exists an object that cannot be seen no matter how much the driver 5b tries to look for it, i.e. the driver 5b is for example informed that there exists an object that at present cannot be seen.

The main control unit 2 can either communicate said information directly via a display, via audio, or indirectly, via a safety control unit 8 and safety means as will be described more in detail below.

According to some aspects, for both examples above, the vehicle environment detection system 1 further comprises a safety control unit 8 and safety means 9, 10, 11, where the safety control unit 8 is arranged to control the safety means 9, 10, 11 in dependence of input from the main control unit 2.

According to some aspects, the main control unit 2 is adapted to communicate said information, in this case the second type of information, to the safety control unit 8.

According to some aspects, the safety means comprises a warning issuing device 9 that is adapted to issue warnings that differ in dependence of whether the object 7 is detectable by the environment observing unit 5a, 5b or not. A first type of warning corresponds to the first type of information and a second type of warning corresponds to the second type of information irrespective of if the environment observing unit 5a, 5b is a second environment detection sensor 5a or a driver 5b. According to some aspects, the first type of warning is constituted by absence of warning, i.e. no warning is issued.

For example, the safety means comprises at least one of automatic steering 10 and automatic braking 11.

This means that if the object 7 is determined to not being detectable by the driver 5b, a warning message can appear at the warning issuing device 9 in combination with other safety means such as automatic steering 10 and automatic braking 11 being engaged, thus informing the driver 5b of the reason for the action taken. On the other hand, if the object 7 is determined to be detectable by the driver 5b, no such warning is necessary since it then should be clear why one or more safety means are engaged.

According to some aspects, the vehicle environment detection system 1 comprises an additional eye-tracking system adapted to determine the exact viewpoint of the driver, with respect to the secondary sensor. Regarding Human-Machine Interfaces (HMI), the warning signal may be a visual overlay on a display 17, showing the object as an occluded hazard 7 in relation to the environment and the covering object 15, see Figure 3, where the visualization can be a visual overlay of the occluded area on top of a real-time video using Augmented Reality (AR). The visualization can naturally be done in many other ways.

This present disclosure relates to a vehicle environment detection system 1 that acts differently depending on whether a driver 5b or a second environment detection sensor 5a is determined to not have any chance of seeing an object that has been detected by a first environment detection sensor 3 and possibly classified as hazardous.

The present disclosure is not limited to the examples above, but may vary freely within the scope of the appended claims. For example, the environment detection sensors can be 2D sensors, using Deep Learning methods, or 3D sensors.

For example, instead of the eye-tracking means 12 described above, similar arrangements are conceivable as alternative eye-tracking means. For example, as an alternative eye-tracking means, there can be a head/face tracking means that determines how the head/face is directed and thus where the eyes probably are located. This can also be used to infer how the eyes probably are directed.

According to another example of an alternative eye-tracking means, the driver 5b, or at least the driver's head/face/eyes, can be assumed to be inside a predefined space, and then it can be determined whether an object is visible from any point in said space, or not.

The examples disclosed above as alternative eye-tracking means normally provide a less accurate estimation of where a driver's eyes are located and/or where a driver is looking compared to the first described eye-tracking means 12, but can provide a trade-off between accuracy and cost.

The term eye-tracking means covers all suitable head/face-tracking and eye-location approximation examples discussed, as well as other such means that are well-known in the art.

The term eye-tracking often refers to computing the current gaze direction of a human; in this context an eye-tracking means is adapted to determine the possible sightlines.

There exists many ways to determine if the object 7 is detectable and/or detected by the environment observing unit 5a, 5b or not. For example, if the first environment detection sensor 3 comprises a LIDAR device, a 3D environment can be determined from LIDAR detection data acquired from the first environment detection sensor 3 in a previously known manner and then projected to the position of the second environment detection sensor 5a, 5b.

According to some aspects, the object can then be regarded as non-detectable if a solid object exists in the 3D environment that occludes the projected object, in the viewpoint of the second environment detection sensor 5a, 5b.

According to some aspects, an object does not necessarily need to be a solid object, it can also be a pothole, a missing part of the road, an oil spill or any other thing that is important to detect for a vehicle environment detection system. According to some aspects, a corresponding situation arises if the main control unit 2 can determine that there is an object 7 that is detectable by the driver 5b, but that the driver 5b does not yet see the object because of the driver's gaze has been determined to be directed in such a way. This means that the object 7 has been determined to be detectable by the first environment detection sensor 3 and the driver 5b, but not to be detected by the driver 5b.

The main control unit 2 is then therefore, according to some aspects, adapted to communicate a third type of information regarding the object 7 if the object has been determined to be detected by the driver 5b, and to communicate a fourth type of information regarding the object 7 if the object has been determined to be undetected by the driver 5b, where the third type of information and the fourth type of information are comprised in the first type of information.

Generally, the present disclosure relates to a vehicle environment detection system 1 that comprises a main control unit 2 and a first environment detection sensor 3. The main control unit 2 is adapted to determine if there is an object 7 that is detectable by the first environment detection sensor 3, and if that is the case, to first determine if the object 7 is detectable by an environment observing unit 5a, 5b, and then to communicate information regarding the object 7. This communication is performed in dependence of if the object 7 has been determined to be detectable by the environment observing unit 5a, 5b or not.

According to some aspects, when the object 7 has been determined to be detectable by the first environment detection sensor 3, the main control unit 2 is adapted to communicate a first type of information regarding the object 7 if the object has been determined to be detectable by the environment observing unit 5a, 5b and to communicate a second type of information regarding the object 7 if the environment observing unit 5a, 5b has been determined to be unable to detect the object 7.

According to some aspects, the second type of information regarding the object 7 is adapted to take into account that the environment observing unit 5a, 5b is unable to detect the object 7.

According to some aspects, the main control unit 2 is adapted to communicate said information to the environment observing unit 5a, 5b.

According to some aspects, the vehicle environment detection system 1 further comprises a safety control unit 8 and safety means 9, 10, 11. The safety control unit 8 is arranged to control the safety means 9, 10, 11 in dependence of input from the main control unit 2.

According to some aspects, the safety means comprises a warning issuing device 9 that is adapted to issue a first type of warning that corresponds to the first type of information and a second type of warning that corresponds to the second type of information.

According to some aspects, the safety means comprises at least one of automatic steering 10 and automatic braking 11.

According to some aspects, the main control unit 2 is adapted to communicate said information to the safety control unit 8. According to some aspects, the environment observing unit is constituted by a second environment detection sensor 5a that is comprised in the vehicle environment detection system 1.

According to some aspects, the environment observing unit is constituted by a driver 5b.

According to some aspects, the driver 5b is adapted to detect objects along a second plurality of sightlines 6. The vehicle environment detection system further comprises an eye-tracking means 12 that is adapted to at least partly determine the second plurality of sightlines 6, and to communicate the determined sightlines 6 to the main control unit 1. The main control unit 1 is adapted to determine if the object 7 is detectable by the second driver 5b based on the communicated determined sightlines 6.

According to some aspects, each environment detection sensor 3, 5a is constituted by at least one of a LIDAR device, a radar device or a camera device.

Generally, the present disclosure also relates to method for a vehicle environment detection system 1, where the method comprises:
detecting S101 objects using a first environment detection sensor 3; and
detecting S102 objects using an environment observing unit 5a, 5b.

The method further comprises:
determining S103 if there is an object 7 that is detectable by the first environment detection sensor 3; and if that is the case,
first determining S104 if the object 7 is detectable by the environment observing unit 5a, 5b; and
then communicating S105 information regarding the object 7 in dependence of if the object 7 has been determined to be detectable by the environment observing unit 5a, 5b or not.

According to some aspects, when the object 7 has been determined to be detectable by the first environment detection sensor 3, the method comprises communicating a first type of information regarding the object 7 if the object 7 has been determined to be detectable by the environment observing unit 5a, 5b, and communicating a second type of information regarding the object 7 if the environment observing unit 5a, 5b has been determined to be unable to detect the object 7.

According to some aspects, the method comprises communicating said information to the environment observing unit 5a, 5b, where the second type of information regarding the object 7 is taking into account that the environment observing unit 5a, 5b is unable to detect the object 7.

## Claims

1. A vehicle environment detection system (1) that comprises a main control unit (2) and a first environment detection sensor (3), **characterized in that** the main control unit (2) is adapted to determine if there is an object (7) that is detectable by the first environment detection sensor (3), and if that is the case, to first determine if the object (7) is detectable by an environment observing unit (5a, 5b), and then to communicate information regarding the object (7), where this communication is performed in dependence of if the object (7) has been determined to be detectable by the environment observing unit (5a, 5b) or not.

2. The vehicle environment detection system (1) according to claim 1, wherein, when the object (7) has been determined to be detectable by the first environment detection sensor (3), the main control unit (2) is adapted to communicate a first type of information regarding the object (7) if the object has been determined to be detectable by the environment observing unit (5a, 5b) and to communicate a second type of information regarding the object (7) if the environment observing unit (5a, 5b) has been determined to be unable to detect the object (7).

3. The vehicle environment detection system (1) according to claim 2, wherein the second type of information regarding the object (7) is adapted to take into account that the environment observing unit (5a, 5b) is unable to detect the object (7).

4. The vehicle environment detection system (1) according to any one of the claims 2 or 3, wherein the main control unit (2) is adapted to communicate said information to the environment observing unit (5a, 5b).

5. The vehicle environment detection system (1) according to any one of the claims 2-4, wherein the vehicle environment detection system (1) further comprises a safety control unit (8) and safety means (9, 10, 11), where the safety control unit (8) is arranged to control the safety means (9, 10, 11) in dependence of input from the main control unit (2).

6. The vehicle environment detection system (1) according to claim 5, wherein the safety means comprises a warning issuing device (9) that is adapted to issue a first type of warning that corresponds to the first type of information and a second type of warning that corresponds to the second type of information.

7. The vehicle environment detection system (1) according to any one of the claims 5 or 6, wherein the safety means comprises at least one of automatic steering (10) and automatic braking (11).

8. The vehicle environment detection system (1) according to any one of the claims 2-7, wherein the main control unit (2) is adapted to communicate said information to the safety control unit (8).

9. The vehicle environment detection system (1) according to any one of the previous claims, wherein the environment observing unit is constituted by a second environment detection sensor (5a) that is comprised in the vehicle environment detection system (1).

10. The vehicle environment detection system (1) according to any one of the claims 1-8, wherein the environment observing unit is constituted by a driver (5b).

11. The vehicle environment detection system (1) according to claim 10, wherein the driver (5b) is adapted to detect objects along a second plurality of sightlines (6), where the vehicle environment detection system further comprises an eye-tracking means (12) that is adapted to at least partly determine the second plurality of sightlines (6), and to communicate the determined sightlines (6) to the main control unit (1), where the main control unit (1) is adapted to determine if the object (7) is detectable by the second driver (5b) based on the communicated determined sightlines (6).

12. The vehicle environment detection system (1) according to any one of the previous claims, wherein each environment detection sensor (3, 5a) is constituted by at least one of a LIDAR device, a radar device or a camera device.

13. A method for a vehicle environment detection system (1), where the method comprises:
detecting (S101) objects using a first environment detection sensor (3); and
detecting (S102) objects using an environment observing unit (5a, 5b), **characterized in that** the method further comprises:
determining (S103) if there is an object (7) that is detectable by the first environment detection sensor (3); and if that is the case,
first determining (S104) if the object (7) is detectable by the environment observing unit (5a, 5b); and
then communicating (S105) information regarding the object (7) in dependence of if the object (7) has been determined to be detectable by the environment observing unit (5a, 5b) or not.

14. The method according to claim 1, wherein when the object (7) has been determined to be detectable by the first environment detection sensor (3), the method comprises communicating a first type of information regarding the object (7) if the object (7) has been determined to be detectable by the environment observing unit (5a, 5b), and communicating a second type of information regarding the object (7) if the environment observing unit (5a, 5b) has been determined to be unable to detect the object (7).

15. The method according to claim 14, wherein the method comprises communicating said information to the environment observing unit (5a, 5b), where the second type of information regarding the object (7) is taking into account that the environment observing unit (5a, 5b) is unable to detect the object (7).
